# EUROPEAN PATENT SPECIFICATION

(11) **EP 1 863 226 B1**
(45) Date of publication and mention of the grant of the patent: **06.07.2011**
(21) Application number: 06114740.1
(22) Date of filing: 30.05.2006
(51) Int. Cl.: H04W 28/14

(54) **Device and method to process OFDM-based symbols in wireless network**
Vorrichtung und Verfahren zur Verarbeitung von OFDM-basierenden Symbolen im drahtlosen Netz
Dispositif et procédé pour le traitement de symboles fondés sur OFDM dans un réseau sans fils

(43) Date of publication of application: 05.12.2007
(73) Proprietor: Abilis Systems Sarl, 1228 Plan-Les-Ouates (CH)
(72) Inventor: Mathys, Yves, 1233, Bernex (CH); Duret, Alain, 74800, Saint-Pierre-en-Faucigny (FR)
(74) Representative: P&TS Patents & Technology Surveys SA

(56) References cited:
- US-A1- 2002 024 993
- US-A1- 2005 254 486

## Description

### Introduction

This invention concerns the field of mobile communication device and in particular, to wireless mobile communication device able to communicate through one or more communication protocols such as DAB, DVB, WLAN or WiMAX.

### Prior Art

Most broadband communication protocols are based on OFDM modulation, such as DAB, DVB, DVB-T, DVB-H, T-DMB, WLAN, WiMAX. Although these standards are based on the same modulation, they differ in many ways and use a variety of modulation parameters and operating modes.

The invention concerns a mobile device having a programmable processing architecture allowing demodulation and modulation of OFDM symbols supporting multiple OFDM standards such as DAB, DVB, WLAN or WiMAX.

Systems today are based on specific protocols, dedicated hardware blocks for OFDM processing. In order to support additional OFDM protocols, the entire system must be re-developed. In the final product, the processing elements are duplicated resulting in large area and duplication of similar functional blocks.

**Orthogonal frequency-division multiplexing (OFDM),** also sometimes called **discrete multitone modulation (DMT),** is a complex modulation technique for transmission based upon the idea of frequency-division multiplexing (FDM) where each frequency channel is modulated with a simpler modulation. In OFDM the frequencies and modulation of FDM are arranged to be orthogonal with each other which almost eliminates the interference between channels. Although the principles and some of the benefits have been known for 40 years, it is made popular today by the lower cost and availability of digital signal processing components.

A number of extra useful benefits, particularly multipath resistance, arise when the data is coded with some Forward Error Correction (FEC) scheme prior to modulation called channel coding. This is called Coded OFDM abbreviated to COFDM.

COFDM is also now widely used in Europe and elsewhere for terrestrial digital TV using the DVB-T standard. One of the major benefits provided by COFDM is that it renders radio broadcasts relatively immune to multipath distortion, and signal fading due to atmospheric conditions, or passing aircraft.

US2005/0254486 discloses an OFDM processor with multiple processors in various series/parallel configurations.

### Brief description of the invention

The aim of this invention is to propose a device and a method to efficiently process the symbols coded in OFDM according to the various protocols available.

This is achieved through a device to process OFDM-based symbols comprising a base band input data and a base band output data, and comprising at least two programmable execution units connected to at least one working memory, this device being characterized in that, the programmable execution units (EU) are connected to the memory through a memory management unit, said programmable execution units having an input memory range and an output memory range, the device further comprising a state scheduler connected to the execution units and to the memory management unit, said scheduler having means to :
- load the related program into the execution units thus defining the function and the input and output memory ranges of said programmable execution units,
- assign the input and output memory range of said working memory relative to the programmable execution unit with the programmable execution unit input and output memory ranges through the memory management unit at each pipeline period,
- define the processing data flow of the symbols by defining the number of programmable execution units and the order in which the programmable execution units are involved.

The OFDM symbol is processed through multiple pipeline stages, similar to a pipeline processing unit found in typical MCU execution unit, however, in the present invention, the pipeline execution unit is fully reconfigurable, i.e.
- the number of stages
- the memory resource allocation per execution unit
- the sequence of the pipeline
- the data flow

This allows adapting to any OFDM symbol processing requirements defined in the broadband standards with their mode of operations such as synchronization, sniffing, receiving, transmitting, etc.

The system is based on a priority based memory map unit which eliminates data movement in the pipeline, thus, saving processing and power.

The programmable execution units are preferably Digital Signal Processor (DSP).

### Brief description of the figures

The invention will be better understood thanks to the attached figures in which :
- the figure 1 illustrates an OFDM pipeline processing architecture
- the figure 2 illustrates a three stages pipeline processing
- the figure 3 illustrates a four stages pipeline processing with 2 concurrent stages
- the figure 4 illustrates the set of parameters defining the behaviour of the pipeline processing device.

### Detailed description

At the receiver, the antenna signal is sent to an A/D conversion unit. This unit generates a stream of digital complex values, typically with a resolution of 6-12 bits. Since the receiver has to detect the beginning of the sequence of OFDM symbols, a special coding (referred to as frame header) is used. The structure of such a frame depends on the specific wireless standard used. A part of a header according to the Hiperlan 2 standard is shown in the figure below.

| | | | | | | | | | | | | | | | |
|---|---|---|---|---|---|---|---|---|---|---|---|---|---|---|---|
| A | -A | A | -A | B | ooo | B | B | -B | P0 | P1 | ... | ... | ... | ... | Pn |

The signals A and B are predefined values. The first task of an OFDM decoder is to find the sequence of A's and B's. If this header was detected, the information bits have to be demodulated by using a Fourier transform. This implementation analysis is based on the detection of the B; B; -B sequence.

Since the incoming signal is oversampled, the introduction of a down sampling stage is necessary at the input. A second step is the removal of the header. A third step is concerned with removing the interference protection copy to get the 64 symbols for the FFT. This sequence of 64 complex values is sent to a FFT 64 stage to compute the original 64 information bits. The next step is the selection of the 48 information bits, out of the QPSK coded 64 values. Since a FFT like structure is used in a decoder application the output sequence generated by the FFT has to be sorted again. This is done in combination with the selection of the 48 information bits.

To improve bandwidth interference (introduced by channel noise and reflections), a copy of the last bits is added to the beginning of the time domain signal. The resulting stream of packets is called an OFDM symbol. A sequence of OFDM symbols including a specific header is transmitted. The header is used to detect the beginning of a sequence of OFDM symbols and may contain additional information like the type of transmission.

According another way of broadcast using OFDM protocol such as on Mobile TV, no preamble (A,B sequence) is used but pilots are scattered in the data and up to 8000 carriers.

Various processing are executed by the receiver which are OFDM standards dependent, i.e. :
- synchronization (special frame as for Hyperlan or pilots)
- frequency correction and FFT
- channel estimation and correction
- gain control over the reception chain

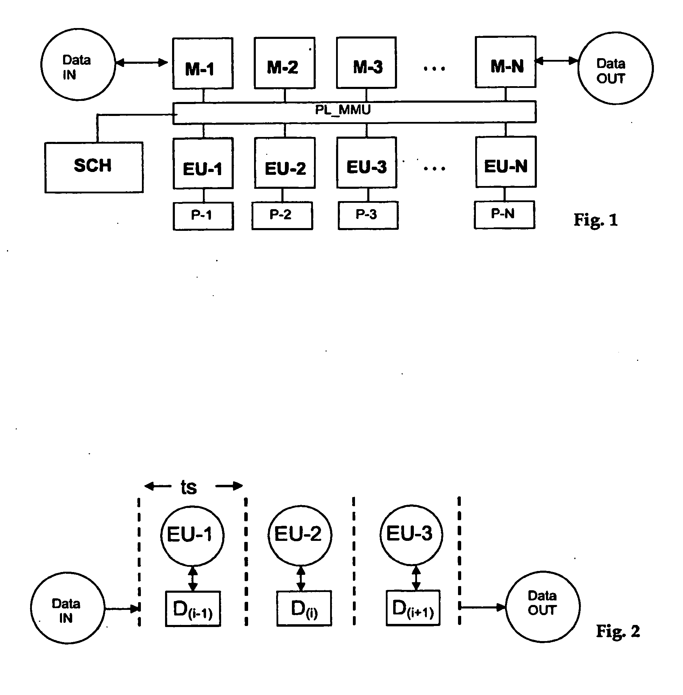

In order to process the stream of symbols, appropriate device architecture is necessary. The architecture, as illustrated in the figure 1 is made of 1 to N execution units (EU-1,.. EU-N). Each unit is programmable and a set of programs are stored into a dedicated program memory (P1,.. PN). The data memory blocks set, M1..M-N, are physical memory blocks connected to a common bus interface. The memory blocks are mapped into a virtual memory map shared by the execution units.

The PL_MMU unit is a configurable memory management unit, this unit maps the virtual addresses to the physical addresses. This unit allows concurrent data access allowing parallel processing with dedicated memory resources allocated to the execution unit EU. The access to the physical blocks is priority based, the priority depends on the pipeline stage and it sets by the pipeline scheduler (SCH).

The scheduler SCH, is a state-machine unit which dynamically configures the pipeline mechanism for a given operating mode. This unit configures the memory management unit PL_MMU defining the number of stages in the pipeline, setting the pipeline flow of execution, allocating memory resources to the execution unit EU and setting the pipeline time period.

Once the pipeline time period expired, the scheduler SCH reconfigures the memory management unit PL_MMU memory mapping and priority avoiding data copy between the pipeline stages, thus saving power and processing.

The OFDM symbol, Data In, is a stream of I/Q sampled data by an ADC data converter. The Data out is a demodulated data bit stream feeding the error correction unit. In the modulation operating mode, the Data Out is the incoming bit stream and the output, Data-In then, is the modulated data steam.

For a 3 stages pipeline, the mode operation is depicted in the figure 2. The EU unit runs for one pipeline period, ts, which is programmed in the memory management unit PL_MMU. After this time period, the PL_MMU remaps the memory allocation so the data processed by EU-1 is then allocated to the working address of the EU-2 unit.

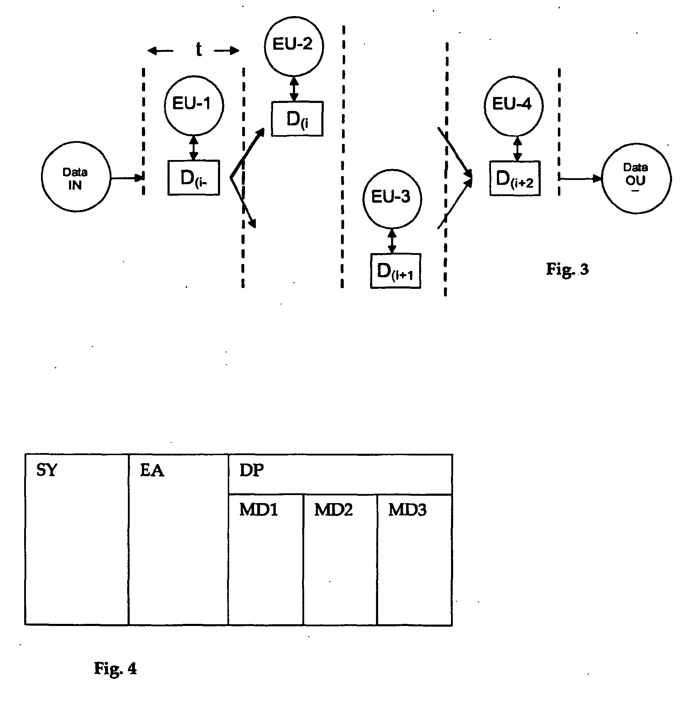

The number of stages in the execution pipeline and the data flow is fully reconfigurable. While the pipeline period is fixed for a given operating mode, the system is capable to allocate multiple periods to a set of execution stage. For example, as seen in figure 3, the pipeline period for the execution unit 2 and 3 are 2 x ts (pipeline period), so the data processed in the first stage is ping-pong between the working address of EU-2 and EU-3. The scheduler can define the connection between each execution unit EU according to the program currently loaded. In the example of the figure 3, the same program is loaded in the execution unit EU-2 and the execution unit EU-3. In order to save time since the process in these two executions unit needs two pipeline period, two execution units are dedicated to the same task, alternatively loaded with the symbol to be processed. The execution unit EU-4 receives the data alternatively from execution unit EU-2 and EU-3. The task of the scheduler SCH is to remap the input memory range of the execution unit EU-4, i.e. during a first pipeline period to the output memory range of the execution unit EU-2, and during the second pipeline period, the scheduler maps the input memory range of the execution unit EU-4 to the output memory range of the execution unit EU-3.

The number of execution units involved is scalable. Depending of the protocol currently selected or for a given pre-processing, not all execution units are necessary active. The scheduler defines the data flow and the connections of the execution units to achieve the current task. This can be done dynamically when the processing conditions (data errors, noise, multi-path detection) lead to an increase of the correction operations to extract the data.

A task for an execution unit EU last usually one pipeline period. Each pipeline period, the execution unit re-execute the same task on a different set of data. In some cases, a task can last more than one pipeline period and the scheduler tend to optimize the various tasks so that another execution has no to wait until the former execution unit ends. This is illustrated at the figure 2 already described.

When an execution unit is not necessary for a given process, e.g. the synchronization stage when less processing power is necessary, the scheduler SCH can deactivate the idled execution unit. This can be achieved by freezing the clock applied to said execution unit or switching off the power supply. The scheduler can also anticipate the future need of an execution unit currently in idle mode by restating it i.e. applying the power supply or feeding the clock.

The figure 4 shows the set of parameters that are used by the device, in particular the scheduler SCH. The processing of a symbol in a given protocol is mainly based on three stages. The first stage is the synchronization step SY. The inputted data is processed so as to detect the markers within the signal to synchronize the data acquisition.

The second stage is the early acquisition EA of the data. During that stage, the environmental conditions are detected so as to have a better figure of the delay, echo, noise on the signal.

The third stage is the data processing DP i.e. the extraction of the symbols. In this stage, different algorithms MD1, MD2, MD3 can be used depending on the conditions previously detected.

A set of parameters comprises the program to be loaded into the execution unit EU, the execution units participating to the task, the mapping between the working memory and the input and output memory range for each execution unit relative to the pipeline period. This mapping is a dynamic process since for each pipeline period, the mapping can vary.

At the input of the device, the scheduler synchronizes the arrival of the input data into the working memory accessible by the first execution unit and trig the first execution unit to start the processing when sufficient data are in. It is not necessary to wait until the full symbol is loaded into the memory to start the processing since the execution unit can process the inputted data from part of the symbol.

The claimed pipeline processing allows :
- Scalable multiprocessors architecture from 2 to N processors
- Reconfigurable pipeline execution unit
- Fast reconfigurable switch mode (<100us)
- Zero data move architecture saving power and performance
- Facilitate software development with fixed working memory address
- Common memory space to ease processors communication

## Claims

1. Device to process OFDM-based symbols comprising a base band input data and a base band output data, and comprising at least two programmable execution units connected to at least one working memory, the at least two programmable execution units (EU) being connected to the at least one working memory (M-1, M-2, M3, M-N) through a memory management unit (PL_MMU), said at least two programmable execution units (EU) having an input memory range and an output memory range, the device further comprising a state scheduler (SCH) connected to the at least two programmable execution units (EU) and to the memory management unit (PL_MMU), being **characterized by** said scheduler (SCH having means to
- load a related program into the at least two execution units (EU), thus defining a task
- load into the memory management unit (PL_MMU) the input and output memory ranges of said at least two programmable execution units (EU), allowing access by the at least two execution units to the base band input and base band output data of said at least two programmable execution units
- assign the input and output memory range of said at least one working memory relative to the at least two programmable execution units (EU) with the at least two programmable execution unit (EU) input and output memory ranges through the memory management unit (PL_MMU) at each pipeline period,
- define the processing data flow of the symbols by defining the number of at least two programmable execution units (EU) and the order in which the at least two programmable execution units (EU) are involved.

2. Device of claim 1, **characterized in that**, the scheduler (SCH) has means to set the base band input and base band output data priority for each of the at least two programmable execution units (EU) defining the priority to access the working memory.

3. Device of claim 1 or 2 comprising at least three programmable execution units (EU), **characterized in that** the scheduler has means to map, through the memory management unit (PL_MMU), the input memory range of the last programmable execution unit (EU-4) to the output memory range of the first programmable execution unit (EU-2) during a first pipeline period and to map the input memory range of the last execution unit (EU-4) to the output memory range of the second programmable execution unit (EU-3) during a second pipeline period.

4. Device of claim 1 or 2 comprising at least three programmable execution units (EU), **characterized in that** the scheduler has means to map, through the memory management unit (PL_MMU), the output memory range of the first programmable execution unit (EU-1) to the input memory range of the second programmable execution unit (EU-2) during a first pipeline period and to map the output memory range of the first programmable execution unit (EU-1) to the input memory range of the third programmable execution unit (EU-3) during a second pipeline period.

5. Device of claims 1 to 4, **characterized in that**, the scheduler (SCH) has means to deactivate the programmable execution units (EU) not currently involved in the processing thus saving power supply.

6. Device of claim 5, **characterized in that**, the deactivation of a programmable execution unit (EU) is achieved by freezing the clock supplied.

7. Device of claim 4, **characterized in that**, the deactivation of a programmable execution unit (EU) is achieved by switching off the power supply.

8. Device of claims 1 to 7, **characterized in that**, the scheduler (SCH) comprises several set of parameters, each set defining the program to be loaded in the programmable execution units, the programmable execution units involved to process the data flow between the base band input and the base band output data, and the mapping between the at least one working memory and the input and output memory range for each programmable execution unit relative to the pipeline period.

9. Device of claim 8, **characterized in that**, a different set of parameters is loaded according to different protocols such as DAB, DVB, WLAN or WiMAX.

10. Method to process OFDM-based symbols for a device comprising a base band input data and a base band output data, and comprising at least two programmable execution units connected to at least one working memory, this method comprising the connection of the at least two programmable execution units (EU) to the at least one memory (M-1, M-2, M3, ... M-N) through a memory management unit (PL_MMU), said at least two programmable execution units (EU) having an input memory range and an output memory range, and further comprising the connection of a state scheduler (SCH) to the at least two programmable execution units (EU) and to the memory management unit (PL_MMU), allowing the at least two programmable execution units to be mapped to the at least one working memory, this method **characterized by** comprising the steps of :
- loading a related program into the at least two programmable execution units (EU) thus defining an execution unit function,
- loading into the memory management unit (PL_MMU) the input and output memory ranges of said at least two programmable execution units (EU) allowing access by the at least two programmable execution units to the base band input and base band output data of said at least two programmable execution unit,
- assigning the input and output memory range of said at least one working memory relative to the at least two programmable execution unit (EU) with the at least two programmable execution unit (EU) input and output memory ranges through the memory management unit (PL_MMU) at each pipeline period,
- defining the processing data flow of the symbols by defining the number of at least two programmable execution units (EU) and the order in which the at least two programmable execution units (EU) are involved.

11. Method of claim 10, **characterized in that**, it further comprises the step of setting the base band input and base band output data priority for each at least two programmable execution unit (EU) defining the priority to access the at least one working memory

12. Method of claims 10 and 11, involving at least three programmable execution units (EU), **characterized in that** it further comprises the steps of mapping, through the memory management unit (PL_MMU), the input memory range of the last programmable execution, unit (EU-4) to the output memory range of the first programmable execution unit (EU-2) during a first pipeline period and mapping the input memory range of the last programmable execution unit (EU-4) to the output memory range of the second programmable execution unit (EU-3) during a second pipeline period.

13. Method of claims 10 and 11, involving at least three programmable execution units (EU), **characterized in that** it further comprises the steps of mapping, through the memory management unit (PL_MMU), the output memory range of the first programmable execution unit (EU-1) to the input memory range of the second programmable execution unit (EU-2) during a first pipeline period and mapping the output memory range of the first programmable execution unit (EU-1) to the input memory range of the third programmable execution unit (EU-3) during a second pipeline period.

14. Method of claims 10 to 13, **characterized in that**, it further comprises the step of deactivating the programmable execution units (EU) not currently involved in the processing to save power supply.

15. Method of claim 14, **characterized in that**, the deactivation of a programmable execution unit (EU) is achieved by freezing the clock supplied.

16. Method of claim 14, **characterized in that**, the deactivation of a programmable execution unit (EU) is achieved by switching off the power supply.

17. Method of claims 10 to 16, **characterized in that**, it further comprises the step of loading one set of parameters among several set of parameters, each set defining the program to be loaded in the programmable execution units, the programmable execution units involved to process the data flow between the base band input and the base band output data, and the mapping between the at least one working memory and the input and output memory range for each programmable execution unit relative to the pipeline period.

18. Method of claim 17, **characterized in that**, a different set of parameters is loaded according to different protocols such as DAB, DVB, WLAN or WiMAX.

## Patentansprüche

1. Vorrichtung, um OFDM basierte Symbole für eine Vorrichtung zu bearbeiten, umfassend Grundbandeingangsdaten und Grundbandausgangsdaten und umfassend mindestens zwei programmierbare Ausführungseinheiten, die mit mindestens einem Arbeitsspeicher verbunden sind, die mindestens zwei programmierbaren Ausführungseinheiten (EU) sind mit dem mindestens einem Arbeitsspeicher (M-1, M-2, M3, ..., M-N) durch eine Speichermanagereinheit (PL_MMU) verbunden, besagte mindestens zwei programmierbare Ausführungseinheiten (EU) haben einen Eingangsspeicherbereich und einen Ausgangsspeicherbereich, die Vorrichtung umfasst weiter ein Statussteuerprogramm (SCH), das mit den mindestens zwei Ausführungseinheiten (EU) und mit der Speichermanagereinheit (PL_MMU) verbunden ist, diese Vorrichtung hat Mittel zum:
- Laden eines bezogenen Programms in die mindestens zwei Ausführungseinheiten (EU), um eine Aufgabe zu definieren,
- Laden in die Speichermanagereinheit (PL_MMU) die Eingangs- und Ausgangsspeicherbereiche von besagtem mindestens zwei programmierbaren Ausführungseinheiten (EU), was den Zugang durch die mindestens zwei programmierbaren Ausführungseinheiten zu dem Grundbandeingangs- und dem Grundbandausgangsdaten von besagten mindestens zwei programmierbaren Ausführungseinheiten erlaubt,
- Zuordnen des Eingangs und Ausgangsspeicherbereichs von besagtem mindestens einem Arbeitsspeicher zu den mindestens zwei programmierbaren Ausführungseinheiten (EU) mit den mindestens zwei programmierbaren Ausführungseinheiten (EU) Eingangs- und Ausgangsspeicherbereichen durch die Speichermanagereinheit (PL_MMU) zu jeder Pipelineperiode,
- Definieren des Verarbeitungsdatenflusses von den Symbolen durch Definieren der Anzahl der mindestens zwei programmierbaren Ausführungseinheiten (EU) und der Reihenfolge, in welcher die programmierbaren Ausführungseinheiten (EU) angeordnet sind.

2. Vorrichtung gemäss Anspruch 1, **dadurch gekennzeichnet, dass** es weiter Mittel zum Setzen der Grundbandeingangs- und des Grundbandausgangsdatenpriorität für jede der mindestens zwei programmierbaren Ausführungseinheiten (EU) hat, um die Priorität des Zugriffs auf den Arbeitsspeicher zu definieren.

3. Vorrichtung gemäss Anspruch 1 oder 2, umfassend mindestens drei programmierbare Ausführungseinheiten (EU), **gekennzeichnet, dadurch dass** das Steuerprogramm Mittel zum Zuordnen durch die Speichermanagereinheit (PL_MMU) des Eingangsspeicherbereichs der letzten programmierbaren Ausführungseinheit (EU-4) zu dem Ausgangsspeicherbereich der ersten programmierbaren Ausführungseinheit (EU-2) während einer ersten Pipelineperiode und Zuordnen des Eingangsspeicherbereichs der letzten programmierbaren Ausführungseinheit (EU-4) zu dem Ausgangsspeicherbereichs der zweiten Ausführungseinheit (EU-3) während einer zweiten Pipelineperiode hat.

4. Vorrichtung gemäss Anspruch 1 oder 2, umfassend mindestens drei programmierbare Ausführungseinheiten (EU), **gekennzeichnet, dadurch dass** das Steuerprogramm Mittel zum Zuordnen durch die Speichermanagereinheit (PL_MMU) des Ausgangsspeicherbereichs der ersten programmierbaren Ausführungseinheit (EU-1) zu dem Eingangsspeicherbereichs der zweiten Ausführungseinheit (EU-2) während einer ersten Pipelineperiode und zum Zuordnen des Ausgangsspeicherbereichs der ersten programmierbaren Ausführungseinheit (EU-1) zu dem Eingangsspeicherbereichs der dritten Ausführungseinheit (EU-2) während einer zweiten Pipelineperiode hat.

5. Vorrichtung gemäss Anspruch 1 bis 4, **dadurch gekennzeichnet, dass** das Steuerprogramm (SCH) Mittel zum Deaktivieren der programmierbaren Ausführungseinheit (EU) hat, die gerade nicht in der Verarbeitung involviert sind, um Strom zu sparen.

6. Vorrichtung gemäss Anspruch 5, **dadurch gekennzeichnet, dass** die Deaktivierung einer programmierbaren Ausführungseinheit (EU) durch Einfrieren der bereitgestellten Uhr erreicht wird.

7. Vorrichtung gemäss Anspruch 4, **dadurch gekennzeichnet, dass** die Deaktivierung einer programmierbaren Ausführungseinheit (AU) durch Abschalten der Stromversorgung erreicht wird.

8. Vorrichtung gemäss Anspruch 1 bis 7, **dadurch gekennzeichnet, dass** das Steuerprogramm (SCH) verschiedene Sätze von Parametern umfasst, wobei jeder Satz von Daten das in die programmierbare Ausführungseinheiten ladbare Programm definiert, wobei die programmierbare Ausführungseinheiten den Datenfluss zwischen den Grundbandeingangs- und dem Grundbandausgangsdaten und das Zuordnen zwischen dem mindestens einen Arbeitsspeicher und dem Eingangs- und Ausgangsspeicherbereich für jede mindestens eine Ausführungseinheit relativ zu der Pipelineperiode bearbeitet.

9. Vorrichtung gemäss Anspruch 8, **dadurch gekennzeichnet, dass** ein anderer Satz von Parametern gemäss anderen Protokollen wie DAB, DVB, WLAN oder WiMAX geladen wird.

10. Verfahren, um OFDM basierte Symbole für eine Vorrichtung zu bearbeiten, umfassend Grundbandeingangsdaten und Grundbandausgangsdaten und umfassend mindestens zwei programmierbare Ausführungseinheiten, die mit mindestens einem Arbeitsspeicher verbunden sind, dieses Verfahren umfasst die Verbindung der mindestens zwei programmierbaren Ausführungseinheiten (EU) zu dem mindestens einem Speicher (M-1, M-2, M3, ..., M-N) durch eine Speichermanagereinheit (PL_MMU), besagte mindestens zwei programmierbare Ausführungseinheiten (EU) hat einen Eingangsspeicherbereich und einen Ausgangsspeicherbereich und weiter umfassend die Verbindung von einem Statussteuerprogramm (SCH) mit den mindestens zwei Ausführungseinheiten (EU) und mit der Speichermanagereinheit (PL_MMU), um zu erlauben, die mindestens zwei Ausführungseinheiten zu dem mindestens einen Arbeitsspeicher zuzuordnen, wobei dieses Verfahren durch die Schritte **gekennzeichnet** ist:
- Laden eines bezogenen Programms in die mindestens zwei programmierbaren Ausführungseinheiten (EU), um eine Ausführungseinheitsfunktion zu definieren,
- Laden in die Speichermanagereinheit (PL_MMU) die Eingangs- und Ausgangsspeicherbereiche von besagtem mindestens zwei programmierbaren Ausführungseinheiten (EU), was den Zugang durch die mindestens zwei programmierbaren Ausführungseinheiten zu dem Grundbandeingangs- und dem Grundbandausgangsdaten von besagten mindestens zwei programmierbaren Ausführungseinheiten erlaubt,
- Zuordnen des Eingangs und Ausgangsspeicherbereichs von besagtem mindestens einem Arbeitsspeicher zu den mindestens zwei programmierbaren Ausführungseinheiten (EU) mit den mindestens zwei programmierbaren Ausführungseinheiten (EU) Eingangs- und Ausgangsspeicherbereichen durch die Speichermanagereinheit (PL_MMU) zu jeder Pipelineperiode,
- Definieren des Verarbeitungsdatenflusses von den Symbolen durch Definieren der Anzahl der mindestens zwei programmierbaren Ausführungseinheiten (EU) und der Reihenfolge, in welcher die programmierbaren Ausführungseinheiten (EU) angeordnet sind.

11. Verfahren gemäss Anspruch 10, **dadurch gekennzeichnet, dass** es weiter den Schritt von Setzen der Grundbandeingangs- und des Grundbandausgangsdatenpriorität für jede der programmierbaren Ausführungseinheiten (EU), um die Priorität des Zugriffs auf den mindestens einen Arbeitsspeicher zu definieren.

12. Verfahren gemäss Ansprüchen 10 und 11, das mindestens drei programmierbare Ausführungseinheiten (EU) verwenden, **gekennzeichnet, dadurch dass** es weiter die Schritte von Zuordnen durch die Speichermanagereinheit (PL_MMU) des Eingangsspeicherbereichs der letzten programmierbaren Ausführungseinheit (EU-4) zu dem Ausgangsspeicherbereich der ersten programmierbaren Ausführungseinheit (EU-2) während einer ersten Pipelineperiode und Zuordnen des Eingangsspeicherbereichs der letzten programmierbaren Ausführungseinheit (EU-4) zu dem Ausgangsspeicherbereichs der zweiten Ausführungseinheit (EU-3) während einer zweiten Pipelineperiode umfasst.

13. Verfahren gemäss Ansprüchen 10 und 11, das mindestens drei programmierbare Ausführungseinheiten (EU) verwenden, **gekennzeichnet, dadurch dass** es weiter die Schritte von Zuordnen durch die Speichermanagereinheit (PL_MMU) des Ausgangsspeicherbereichs der ersten programmierbaren Ausführungseinheit (EU-1) zu dem Eingangsspeicherbereichs der zweiten Ausführungseinheit (EU-2) während einer ersten Pipelineperiode und Zuordnen des Ausgangsspeicherbereichs der ersten programmierbaren Ausführungseinheit (EU-1) zu dem Eingangsspeicherbereichs der dritten Ausführungseinheit (EU-2) während einer zweiten Pipelineperiode umfasst.

14. Verfahren gemäss Ansprüchen 10 bis 13, **dadurch gekennzeichnet, dass** es weiter den Schritt von Deaktivieren der programmierbaren Ausführungseinheit (EU) umfasst, die gerade nicht in der Verarbeitung involviert sind, um Strom zu sparen.

15. Verfahren gemäss Anspruch 14, **dadurch gekennzeichnet, dass** die Deaktivierung einer programmierbaren Ausführungseinheit (EU) durch Einfrieren der bereitgestellten Uhr erreicht wird.

16. Verfahren gemäss Anspruch 14, **dadurch gekennzeichnet, dass** die Deaktivierung einer programmierbaren Ausführungseinheit (AU) durch Abschalten der Stromversorgung erreicht wird.

17. Verfahren gemäss Ansprüchen 10 bis 16, **dadurch gekennzeichnet, dass** es weiter den Schritt von Laden eines Satzes von Parametern unter verschiedenen Sätzen von Parametern enthält, wobei jeder Satz von Daten das in die programmierbare Ausführungseinheiten ladbare Programm definiert, wobei die programmierbare Ausführungseinheiten den Datenfluss zwischen den Grundbandeingangs- und dem Grundbandausgangsdaten und das Zuordnen zwischen dem mindestens einen Arbeitsspeicher und dem Eingangs- und Ausgangsspeicherbereich für jede mindestens eine Ausführungseinheit relativ zu der Pipelineperiode bearbeitet.

18. Verfahren gemäss Anspruch 17, **dadurch gekennzeichnet, dass** ein anderer Satz von Parametern gemäss anderen Protokollen wie DAB, DVB, WLAN oder WiMAX geladen wird.

## Revendications

1. Dispositif pour l'élaboration de symboles basés sur OFDM ayant des données d'entrée en bande base et des données de sortie en bande base, et comprenant au moins deux unités d'exécution programmables connectées à au moins une mémoire de travail, les au moins deux unité d'exécution programmables (EU) étant connectées à la au moins une mémoire de travail (M-1, M-2, M3, ... M-N) par une unité de gestion de mémoire (PL_MMU), les dites unités d'exécution programmables (EU) ayant une plage de mémoire de sortie et une plage de mémoire d'entrée, le dispositif ayant en outre un processeur d'ordonnancement d'état (SCH) connecté aux au moins deux unités d'exécution programmables (EU) et é l'unité de gestion de mémoire (PL_MMU), **caractérisé en ce que** ledit processeur d'ordonnancement d'état comprend des moyens pour :
- charger un programme corrélé dans les au moins deux unités d'exécution (EU), définissant ainsi une tâche
- charger les plages d'entrée et de sortie des dites au moins deux unités d'exécution programmables (EU) dans l'unité de gestion de mémoire (PL_MMU), permettant l'accès par les au moins deux unités d'exécution programmables aux données d'entrée en bande base et de sortie en bande base desdites au moins deux unités d'exécution programmables
- assigner la plage d'entrée et la plage de sortie de ladite au moins une mémoire de travail relatives aux au moins deux unités programmables d'exécution (EU) avec les au moins deux unités programmables d'exécution (EU) par l'unité de gestion de mémoire (PL_MMU) à chaque cycle du pipe-line,
- déterminer le flux de traitement des symboles en définissant le nombre des au mois deus unités d'exécution programmables (EU) et l'ordre dan lequel les au moins deux unités d'exécution programmables (EU) sont impliquées.

2. Dispositif selon la revendication 1, **caractérisé en ce que** le processeur d'ordonnancement (SCH) a des moyens de définir la priorité des données d'entrée en bande base et des données de sortie en bande base pour chacune des au moins deux unités d'exécution programmables (EU) définissant la priorité d'accès à la mémoire de travail.

3. Dispositif selon l'une des revendications 1 ou 2 comprenant au moins trois unités d'exécution programmables (EU), **caractérisé en ce que** le processeur d'ordonnancement a des moyens pour mapper par l'unité de gestion de mémoire (PL_MMU) la plage de mémoire d'entrée de la dernière unité programmable d'exécution (EU-4) vers la plage de mémoire de sortie de la première unité programmable d'exécution (EU-2) durant un premier cycle du pipe-line et pour mapper la plage de mémoire d'entrée de la dernière unité d'exécution (EU-4) vers la plage de mémoire de sortie de la deuxième unité programmable d'exécution (EU-3) durant un second cycle du pipe-line.

4. Dispositif selon l'une des revendications 1 ou 2 comprenant au moins trois unités d'exécution programmables (EU), **caractérisé en ce que** le processeur d'ordonnancement a des moyens pour mapper par l'unité de gestion de mémoire (PL_MMU) la plage de mémoire de sortie de la première unité programmable d'exécution (EU-1) vers la plage de mémoire d'entrée de la seconde unité d'exécution programmable (EU-2) durant un premier cycle du pipe-line et pour mapper la plage plage de mémoire de sortie de la première unité programmable d'exécution (EU-1) vers la plage de mémoire d'entrée de la troisième unité d'exécution programmable (EU-3) durant un second cycle du pipe-line.

5. Dispositif selon l'une des revendications de 1 à 4, **caractérisé en ce que** le processeur d'ordonnancement (SCH) a des moyens pour désactiver les unités programmables d'exécution (EU) non impliquées dans le traitement pour économiser l'énergie d'alimentation.

6. Dispositif selon la revendication 5, **caractérisé en ce que** la désactivation d'une unité d'exécution programmable (EU) est obtenue par figeage du signal d'horloge fourni.

7. Dispositif selon la revendication 4, **caractérisé en ce que** la désactivation d"une unité d'exécution programmable (EU) est obtenue en supprimant l'alimentation électrique.

8. Dispositif selon l'une des revendications de 1 à 7, **caractérisé en ce que** le processeur d'ordonnancement (SCH) comprend plusieurs ensembles de paramètres, chacun définissant le programme à charger dans les unités d'exécution programmables, les unités d'exécution programmables impliquées dans le traitement du flux des données entre les données d'entrée en bande base et les données de sortie en bande base, et le mappage entre la dite au mois une mémoire de travail et les plages d'entrée et de sortie pour chaque unité d'exécution programmable relative au cycle du pipe-line.

9. Dispositif de la revendication 8, **caractérisé en ce qu'**un ensemble de paramètres différent est chargé selon les différents protocoles tels que DAB, DVB, WLAN or WiMAX.

10. Méthode pour traiter des symboles basés sur OFDM pour un dispositif avec des données d'entrée en bande base et des données de sortie en bande base, et comprenant au moins deux unités programmables d'exécution connectées à au mois une mémoire de travail, la méthode comprenant la connexion des au moins deux unités d'exécution programmables (EU) avec la au moins une mémoire (M-1, M-2, M3, ... M-N) par une unité de gestion de mémoire (PL_MMU), lesdites au moins deux unités d'exécution programmables (EU) ayant une plage de mémoire d'entrée et une plage de mémoire de sortie, et comprenant en outre la connexion avec un processeur d'ordonnancement d'état (SCH) avec les au moins deux unités d'exécution programmables (EU) et avec l'unité de gestion de mémoire (PL_MMU), permettant les au moins deux unités programmables d'être mappées vers la au moins une mémoire de travail, la méthode comprenant les étapes de :
- charger un programme corrélé dans les au moins deux unités d'exécution (EU), définissant ainsi une fonction unitaire d'exécution,
- charger les plages d'entrée et de sortie des dites au moins deux unités d'exécution programmables (EU) dans l'unité de gestion de mémoire (PL_MMU), permettant l'accès par les au moins deux unités d'exécution programmables aux données d'entrée en bande base et de sortie en bande base desdites au moins deux unités d'exécution programmables,
- assigner la plage d'entrée et la plage de sortie de ladite au moins une mémoire de travail relatives aux au moins deux unités programmables d'exécution (EU) avec les au moins deux unités programmables d'exécution (EU) par l'unité de gestion de mémoire (PL_MMU) à chaque cycle du pipe-line,
- déterminer le flux de traitement des symboles en définissant le nombre des au mois deus unités d'exécution programmables (EU) et l'ordre dan lequel les au moins deux unités d'exécution programmables (EU) sont impliquées.

11. Méthode selon la revendication 10, **caractérisée en ce qu'**elle comprend également l'étape de déterminer la priorité pour les données d'entrée en bande base et pour les données de sortie en bande base pour chacune des au moins deux unités programmables d'exécution (EU) définissant la priorité d'accès à la au moins une mémoire de travail

12. Méthode selon l'une des revendications 10 ou 11, comprenant au moins trois unités programmables d'exécution (EU), **caractérisée en ce qu'**elle comprend également les étapes de mapper par l'unité de gestion de mémoire (PL_MMU) la plage de mémoire d'entrée de la dernière unité programmable d'exécution (EU-4) vers la plage de mémoire de sortie de la première unité programmable d'exécution (EU-2) durant un premier cycle du pipe-line et pour mapper la plage de mémoire d'entrée de la dernière unité d'exécution (EU-4) vers la plage de mémoire de sortie de la deuxième unité programmable d'exécution (EU-3) durant un second cycle du pipe-line.

13. Méthode selon l'une des revendications 10 ou 11, comprenant au moins trois unités programmables d'exécution (EU), **caractérisée en ce qu'**elle comprend également les étapes de mapper par l'unité de gestion de mémoire (PL_MMU) la plage de mémoire de sortie de la première unité programmable d'exécution (EU-1) vers la plage de mémoire d'entrée de la seconde unité d'exécution programmable (EU-2) durant un premier cycle du pipe-line et pour mapper la plage plage de mémoire de sortie de la première unité programmable d'exécution (EU-1) vers la plage de mémoire d'entrée de la troisième unité d'exécution programmable (EU-3) durant un second cycle du pipe-line.

14. Méthode selon l'une des revendications de 10 à 13, **caractérisée en ce qu'**elle comprend également une étape de désactiver les unités programmables d'exécution (EU) non impliquées dans le traitement pour économiser l'énergie d'alimentation.

15. Méthode selon la revendication 14, **caractérisée en ce que** la désactivation d'une unité d'exécution programmable (EU) est obtenue par figeage du signal d'horloge fourni.

16. Méthode selon la revendication 14, **caractérisée en ce que** la désactivation d'une unité d'exécution programmable (EU) est obtenue en supprimant l'alimentation électrique.

17. Méthode selon l'une des revendications de 10 à 16, **caractérisée en ce qu'**elle comprend également une étape de charger un ensemble de paramètres parmi plusieurs ensembles de paramètres, chacun définissant le programme à charger dans les unités d'exécution programmables, les unités d'exécution programmables impliquées dans le traitement du flux des données entre les données d'entrée en bande base et les données de sortie en bande base, et le mappage entre la dite au mois une mémoire de travail et les plages d'entrée et de sortie pour chaque unité d'exécution programmable relative au cycle du pipe-line.

18. Méthode selon la revendication 17, **caractérisée en ce qu'**un ensemble de paramètres différent est chargé selon les différents protocoles tels que DAB, DVB, WLAN or WiMAX.
